# EUROPÄISCHE PATENTSCHRIFT

(11) **EP 0 329 065 B1**
(45) Veröffentlichungstag und Bekanntmachung des Hinweises auf die Patenterteilung: **06.10.1993**
(21) Anmeldenummer: 89102483.8
(22) Anmeldetag: 14.02.1989
(51) Int. Cl.: A47J 45/07

(54) **Gefäss mit abnehmbarem Griffteil**
Vessel with a detachable handle
Récipient à poignée amovible

(30) Priorität: 19.02.1988 DE 3805231
(43) Veröffentlichungstag der Anmeldung: 23.08.1989
(73) Patentinhaber: Heinrich Baumgarten KG Spezialfabrik für Beschlagteile, D-57277 Neunkirchen (DE)
(72) Erfinder: Baumgarten, Gerd-Diethard, D-5901 Wilnsdorf-Wilden (DE)
(74) Vertreter: Missling, Arne, Dipl.-Ing.

(56) Entgegenhaltungen:
- FR-A- 966 824
- FR-A- 2 049 388
- GB-A- 308 918
- US-A- 2 353 365

## Beschreibung

Die Erfindung bezieht sich auf ein Gefäß entsprechend dem Oberbegriff des Anspruches 1.

Gefäße mit einem Griffteil werden beispielsweise in Form von Kochtöpfen oder Bratpfannen verwendet. Dabei muß das Griffteil so an dem Gefäß befestigt sein, daß eine Relativbewegung zwischen dem Griffteil und dem Gefäß vermieden wird und daß das Gefäß auch in gefülltem Zustand sicher gehandhabt werden kann.

Gefäße, wie z. B. Kochgeschirre, nämlich Bratpfannen oder Kochtöpfe, werden üblicherweise verwendet, um Speisen auf einem Herd, d. h. einer Herdplatte, zu erwärmen. Bei der Behandlung von Speisen in einem Mikrowellenofen erweist es sich als notwendig, spezielle Gefäße zu verwenden, welche in ihrer Form und Ausgestaltung den Anforderungen von Mikrowellenöfen angepaßt sind. Hierbei erweist es sich insbesondere als notwendig, wegen der Gefahr des Funkenüberschlages bei derartigen, für Mikrowellen geeigneten Gefäßen auf überstehende Teile zu verzichten. Infolgedessen ist es nicht möglich, übliche Pfannen oder Kochtöpfe in einem Mikrowellenofen zu verwenden. Dies erweist sich als nachteilig, da zum einen die Anschaffung eines speziellen Gefäßes für den Mikrowellenofen erforderlich ist und da zum anderen Speisen, welche in üblicher Weise zubereitet wurden und in einer Pfanne oder einem Kochtopf erkaltet sind, erst nach dem Umfüllen in ein für die Verwendung in einem Mikrowellenherd geeignetes Gefäß erwärmbar sind.

Es ist auch bereits bekannt, Kochgefäße mit einem abnehmbarem Griffteil gemäß dem Oberbegriff des Anspruchs 1 auszustatten. So ist bei einem Gefäß entsprechend FR-Patentschrift 2 049 388 an einer Gefäßwandung ein aus einem Blechstreifen winkelig geformtes Aufnahmeteil angebracht, das im wesentlichen U-förmig ausgebildet ist und zur Aufnahme des oberen, hakenförmigen Teiles des Griffes der Anhängevorrichtung bestimmt ist. Darüberhinaus weist der Griff ein Klemmelement auf, das auf der Unterseite des Aufnahmeteiles unter Federspannung an diesem als Verriegelungsvorrichtung anliegt. Derartige Aufnahmeteile werden in der Regel an der Gefäßwandung angeschweißt.

Das Aufnahmeteil ragt weit von der Gefäßwand ab, so daß dieses bei abgenommenem Griff beträchtlich über die Umrandung des Gefäßes hervorsteht. Die erforderliche Anhängevorrichtung gerät dabei recht voluminös, weil an dem U-förmigen Aufnahmeteil, dessen Steg an dem Gefäß befestigt ist, der obere Gurt (ein einarmiger Blechhebei) außerordentlich stabil ausgeführt sein muß, um die dort auftretende größte Beanspruchung der gesamten Halteeinrichtung zu ertragen. Das gleiche gilt auch für das Gegenstück, nämlich ein Einhängeteil, das sich am Griffteil befindet. Beide Teile der Anhängevorrichtung sind deshalb bei der bekannten Anordnung als mehrfach abgekantete Gurte ausgeführt, um das Widerstandsmoment gegen die angreifenden Biegekräfte zu erhöhen. Auch dadurch steht das Aufnahmeteil so weit gegenüber der Gefäßwandung vor, daß es bei der Benutzung in einem Mikrowellenofen zu den bereits erwähnten Störungen kommen muß. Ähnliches gilt auch für die ebenfalls vorhandene Verriegelungsvorrichtung, so daß ein derartiges Gefäß für die Verwendung in einem Mikrowellenofen nicht geeignet ist.

Der Erfindung liegt die Aufgabe zugrunde, ein Gefäß zu schaffen, welches sowohl auf einem herkömmlichen Herd als auch in einem Mikrowellenofen verwendbar ist.

Diese Aufgabe wird erfindungsgemäß mit den Merkmalen des Anspruches 1 gelöst.

Das erfindungsgemäße Gefäß zeichnet sich durch eine Reihe erheblicher Vorteile aus. Die lösbare Einhängevorrichtung gestattet es zunächst, das Griffteil bei herkömmlicher Verwendung des Gefäßes so mit diesem zu verbinden, daß auch das gefüllte Gefäß sicher gehandhabt werden kann. Durch die erfindungsgemäße Ausgestaltung der Ausnehmung als Ausbauchung eines Rahmens und durch das in dieses einführbare Einhängeteil wird eine kostengünstige Herstellungsweise ermöglicht und darüberhinaus ein hohes Maß an Betriebssicherheit gewährleistet, wobei auch bei einer ungeübten Bedienungsperson ein fehlerhaftes Anhängen des Griffteiles vermieden werden kann. Es ist möglich, die erfindungsgemäße Einhängevorrichtung so zu dimensionieren, daß die Gefahr von Funkenüberschlägen oder sonstigen Betriebsstörungen vermieden wird. Dabei ist es beispielsweise möglich, die Einhängevorrichtung so auszubilden, daß diese weniger weit von der Außenwandung des Gefäßes absteht als der obere Randflansch des Gefäßes.

Da die Ausnehmung am Gefäß und das Einhängeteil am Griffteil vorgesehen sind, ist es möglich, die voluminöseren und eine größeren Platzbedarf beanspruchenden Teile der Einhängevorrichtung an dem Griffteil vorzusehen, welches hinsichtlich überstehender Teile keinen Beschränkungen unterworfen ist, da das Griffteil nicht in dem Mikrowellenofen verwendet wird.

Der in sich geschlossene Rahmen ist an der Außenwandung des Gefäßes befestigt, wobei die Ausnehmung in Form einer einen Abstand zur Gefäßwandung aufweisenden Ausbauchung ausgebildet ist. Es erweist sich also besonders vorteilhaft, wenn das Einhängeteil in Form einer von der Stirnseite des Griffteiles nach oben vorspringenden, in diese Ausbauchung des Rahmens einführbaren Zunge ausgebildet ist. Der erfindungsgemäße Rahmen kann besonders flach ausgestaltet und eng anliegend an die Außenwandung des Gefäßes ausgebildet sein. Dies erweist sich zum einen hinsichtlich möglicher physikalischer Effekte beim Betrieb des Mikrowellenofens als vorteilhaft, zum anderen ist der Rahmen auch optisch nicht störend und kann im Rahmen der üblichen Herstellungsverfahren für das Gefäß ausgebildet werden. Dabei ist insbesondere zu erwähnen, daß die Verwendung des beschriebenen Rahmens ein Überpolieren oder Reinigen der Außenwandung des Gefäßes nach einem Beschichtungsvorgang der Innenfläche des Gefäßes ermöglicht. Somit werden automatisch ablaufende Oberflächenbehandlungs- oder Polierverfahren durch den Rahmen nicht beeinträchtigt. Da die an dem Griffteil vorgesehene Zunge nur eine sehr geringe Dicke aufzuweisen braucht und beispielsweise aus einem Blechteil herstellbar ist, ist es erfindungsgemäß auch möglich, die Ausbauchung des Rahmens so auszubilden, daß diese von der Gefäßwandung nur um einen geringen Betrag vorsteht. Auf diese Weise ist es möglich, die Durchmesservergrößerung des Gefäßes, welche durch die Anbringung des Rahmens hervorgerufen wird, auf einen Minimalwert zu beschränken.

In einfacher Weise wird der Rahmen direkt mit dem Gefäß verschweißt, wobei dies durch eine Punktschweißverbindung erfolgen kann. Dabei kann der Rahmen an den nichtverschweißten Bereichen einen geringfügigen Abstand zu der Gefäßoberfläche aufweisen, um bei befestigtem Griffteil eine Wärmeisolierung zu gewährleisten.

Der Rahmen ist an seinem unteren Bereich mit einer Verriegelungsausbauchung versehen, in welche lösbar eine bewegbar an dem Griffteil gelagerte Lasche einbringbar ist. Die Verriegelungsausbauchung kann in ähnlicher Weise ausgebildet sein, wie die Ausbauchung zur Einbringung der Zunge des Griffteiles, so daß auch die Verriegelungsausbauchung nur geringfügig über die Außenfläche des Gefäßes vorsteht. Die bewegbar an dem Griffteil gelagerte Lasche kann ebenfalls in Form eines streifenförmigen Blechteiles ausgebildet sein, so daß diese sowohl einfach und kostengünstig herstellbar ist, als auch im Hinblick auf die Ausbauchung des Rahmens nur einen geringen Platzbedarf erfordert. Weiterhin erweist es sich als besonders vorteilhaft, wenn die Lasche elastisch vorgespannt ist und mit der Verriegelungsausbauchung eine Schnappverbindung bildet. Bei einer derartigen Ausgestaltung der Lasche des Griffteiles ist es nicht erforderlich, diese separat zu betätigen, um ein sicheres Verriegeln des Griffteiles sicherzustellen, vielmehr reicht es, die nach oben gerichtete Zunge des Griffteiles in die Ausbauchung des Rahmens einzuhängen und das Griffteil gegen das Gefäß zu drücken. Die elastisch gelagerte Lasche schnappt sodann in die Verriegelungsausbauchung des Rahmens ein und bewirkt eine sichere Verbindung zwischen dem Griffteil und dem Gefäß. In einer weiteren besonders günstigen Ausbildung kann die Lasche mit einem Betätigungsgriff versehen sein, um es der Bedienungsperson zu ermöglichen, die Lasche aus der Verriegelungsausbauchung herauszuziehen oder herauszuschwenken, um das Griffteil von dem Gefäß abzunehmen. Die Größe und Anordnung des Betätigungsgriffes spielt für die Verwendung des Gefäßes in einem Mikrowellenofen keine Rolle, da, wie bereits erwähnt, das Griffteil nicht in den Ofen eingebracht wird.

In besonders vorteilhafter Weise erstreckt sich die Zunge über die gesamte Breite des Griffteiles und weist die gleiche Breite auf, wie die Ausbauchung des Rahmens. Es wird somit sichergestellt, daß die Zunge von ihrer Form und Ausgestaltung zu der Ausbauchung des Rahmens paßt und nach dem Einfügen der Zunge eine Relativbewegung zwischen dem Griffteil und dem Gefäß im wesentlichen verhindert wird.

In einer weiteren besonders günstigen Weiterbildung der Erfindung weist das Griffteil stirnseitig seitliche Abstützungvorsprünge auf, die mit der Gefäßwandung und/oder dem Rahmen in Anlage bringbar sind. Dabei kann es sich als besonders vorteilhaft erweisen, die Abstützvorsprünge so zu dimensionieren, daß diese in den durch den Rahmen gebildeten Innenraum passen, so daß eine Verdrehung des Griffteils relativ zu dem Gefäß vermieden wird. Die Abstützvorsprünge dienen somit nicht nur der Kraftüberleitung, sondern auch der Verdrehsicherung des Griffteils.

Die Abstützvorsprünge sowie die sich nach oben erstrekkende Zunge des Griffteils können einstückig in Form einer Platte ausgebildet sein, welche mit dem Griffteil verbunden ist, beispielsweise mittels einer Schweißverbindung.

Im folgenden wird die Erfindung anhand eines Ausführungsbeispiels in Verbindung mit der Zeichnung beschrieben. Dabei zeigt:
- Fig. 1: eine schematische Seitenansicht eines Teils des erfindungsgemäßen Gefäßes mit dem Griffteil;
- Fig. 2: eine Draufsicht auf ein Ausführungsbeispiel des erfindungsgemäßen Rahmens;
- Fig. 3: eine Schnittansicht entlang der Linie III-III von Fig. 1;
- Fig. 4: eine Schnittansicht entlang der Linie IV-IV von Fig. 2; und
- Fig. 5: eine Schnittansicht entlang der Linie V-V von Fig. 2.

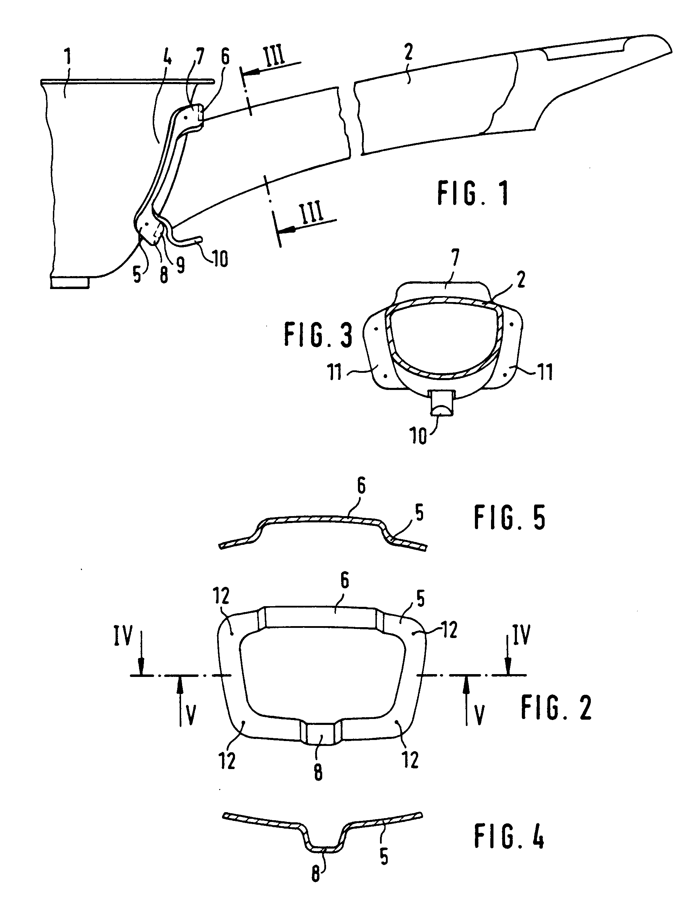

In Fig. 1 ist in der Seitenansicht in schematischer Weise ein Teil eines Gefäßes 1 dargestellt, welches beispielsweise in Form einer Bratpfanne ausgebildet sein kann. Das Gefäß ist mit einem Griffteil 2 verbunden, der in Form eines Stielgriffs für eine Bratpfanne ausgestaltet ist. Das Gefäß ist im Bereich eines Befestigungsbereichs 4 mit einem Rahmen 5 versehen, welcher in Zusammenhang mit den Fig. 2, 4 und 5 im einzelnen noch erläutert werden wird. Das Griffteil 2 ist lösbar mit dem Rahmen 5 verbunden. Diesen Zustand zeigt die Darstellung von Fig. 1.

In Fig. 2 ist der Rahmen 5 in der Draufsicht dargestellt. Der Rahmen 5 ist bei dem gezeigten Ausführungsbeispiel aus einem Metallblech gefertigt und ist in Form eines geschlossenen Rahmens von im wesentlichen rechteckiger Gestalt ausgebildet. Der Rahmen 5 ist, wie aus den Fig. 4, 5 und 1 ersichtlich, in sich so gebogen, daß er eng an der Außenkontur des Gefäßes 1 anlegbar ist. Der Rahmen 5 ist beispielsweise mittels eines Punktschweißverfahrens mit dem Gefäß 1 verbunden, wobei die Verschweißung über vier Punktschweißstellen 12 erfolgen kann. Der Rahmen 5 weist an seinem oberen, sich im wesentlichen in horizontaler Richtung erstreckenden Bereich eine Ausbauchung 6 auf, welche sich über einen Großteil der Breite des Rahmens 5 erstreckt und, wie aus Fig. 5 ersichtlich ist, einen gleichbleibenden, geringen Abstand zu der Wandung des Gefäßes 1 aufweist. Weiterhin ist der untere, im wesentliche horizontale Bereich des Rahmens 5 mit einer Verriegelungsausbauchung 8 versehen, welche sich ebenfalls von der Gefäßwandung weg erstreckt und, ebenso wie die Ausbauchung 6, einen Zwischenraum oder eine Ausnehmung zwischen dem Rahmen 5 und dem Gefäß 1 ausbildet.

In Fig. 4 ist eine Schnittansicht durch das erfindungsgemäße Griffteil 2 dargestellt, wobei zur Verdeutlichung der Darstellung das Griffteil 2 von dem Gefäß 1 abgenommen wurde. Das Griffteil 2 weist einen im wesentlichen rohrförmigen oder rechteckförmigen Querschnitt auf und ist beispielsweise aus Metall in Form eines Hohlrohres ausgebildet. Stirnseitig ist das Griffteil mit einer sich im wesentlichen vertikal (bezogen auf die in Fig. 1 gezeigte Stellung des Gefäßes 1) erstreckenden Zunge 7 versehen, welche eine Breite aufweist, die im wesentlichen der Breite des Griffteils 2 entspricht. Die Zunge 7 ist in Form eines Blechstreifens ausgebildet und weist eine vertikale Höhe auf, die in etwa der Breite des Rahmens 5 entspricht. Die Dimensionierung der Zunge 7 ist so gewählt, daß diese in die durch die Ausbauchung 6 des Rahmens 5 gebildete Ausnehmung zwischen dem Rahmen 5 und dem Gefäß 1 einführbar ist. Wie in Fig. 1 dargestellt, wird zum Verbinden des Griffteils 2 mit dem Gefäß 1 die Zunge 7 von unten in die durch die Ausbauchung 6 gebildete Ausnehmung eingeführt.

Der stirnseitige Bereich des Griffteils 2 weist an seinem unteren Bereich eine Lasche 9 auf, welche elastisch oder bewegbar an dem Griffteil 2 gelagert ist und welche nach dem Einführen der Zunge 7 in den durch die Ausbauchung 6 gebildeten Hohlraum in die Verriegelungsausbauchung 8 einschiebbar ist. Bei dem in Fig. 1 dargestellten Zustand, bei welchem das Griffteil 2 mit dem Gefäß 1 verbunden ist, ist sowohl die Zunge 7 im Bereich der Ausbauchung 6 formschlüssig an dem Rahmen 5 eingehängt, als auch die Lasche 9 in die Verriegelungsausbauchung 8 eingeführt. Die Lasche 9 ist mit einem Betätigungsgriff 10 verbunden, welcher so ausgebildet und dimensioniert ist, daß durch Hochdrücken des Betätigungsgriffes 10 die Lasche 9 aus der Verriegelungsausbauchung 8 gezogen wird. Auf diese Weise ist es möglich, das Griffteil 2, ausgehend von der in Fig. 1 gezeigten Darstellung, von dem Gefäß 1 zu trennen.

Wie in Fig. 3 dargestellt, weist das Griffteil 2 seitliche Abstützungsvorsprünge 11 auf, welche ebenfalls in Form von Blechteilen ausgebildet sein können. Die Abstützungsvorsprünge 11 können einstückig mit der Zunge 7 ausgebildet sein, es ist auch möglich, die Abstützvorsprünge 11 und die Zunge 7 einstückig mit dem Griffteil 2 auszubilden, wenn letzteres aus einem Blechbiegeteil gefertigt ist. Die Abstützvorsprünge 11 sind so in sich gekrümmt, daß sie an die Außenwandung des Gefäßes 1 anlegbar sind, so wie dies in Fig. 1 angedeutet ist. Die Dimensionierung der Abstützvorsprünge 11 ist in vorteilhafter Weise so gewählt, daß diese in den Freiraum des Rahmens 5 einbringbar sind, so wie dies in Fig. 1 gezeigt ist. Auf diese Weise kann formschlüssig eine Verdrehsicherung zwischen dem Griffteil 2 und dem Rahmen 5 erfolgen. Wenn die Abstützungsvorsprünge 11 aus einem Blechmaterial gleicher Stärke wie der Rahmen 5 gefertigt sind, ergibt sich zudem die Möglichkeit, bei angesetztem Griffteil 2 eine optisch ansprechende Ausgestaltung zu schaffen.

Die bewegbar an dem Griffteil 2 gelagerte Lasche 9 und der mit dieser in Betriebsverbindung stehende Betätigungsgriff 10 können beispielsweise mittels einer nichtdargestellten Federeinrichtung in die in Fig. 1 gezeigte Position vorgespannt sein, es ist jedoch auch möglich, die Lasche 9 in sich elastisch auszubilden und so zu dimensionieren und zu lagern, daß die Lasche 9 in die in Fig. 1 gezeigte, vom Griffteil 2 vorstehende Position vorgespannt ist. Weiterhin ist es möglich, die Lasche 9 mit einer Anschrägung oder Abphasung zu versehen, um beim Andrücken des Griffteils 2 gegen das Gefäß 1 ein selbsttätiges Einschnappen der Lasche 9 in die Verriegelungsausbauchung 8 zu ermöglichen.

Die Erfindung ist nicht auf das gezeigte Ausführungsbeispiel beschränkt, vielmehr ergeben sich für den Fachmann im Rahmen der Erfindung vielfältige Abwandlungsvarianten, insbesondere hinsichtlich der Dimensionierung und Ausgestaltung des an dem Gefäß befestigten Rahmens.

## Patentansprüche

1. Gefäß mit abnehmbarem Griffteil, wobei an der Stirnseite des Griffteiles (2) und an dem zugeordneten Befestigungsbereich (4) des Gefäßes (1) eine formschlüssig ineinandergreifende lösbare Einhängevorrichtung vorgesehen ist, welche zumindest eine sich im wesentlichen vertikal erstreckende Ausnehmung und ein vertikales, in die Ausnehmung einführbares Einhängeteil umfaßt, und die Ausnehmung und das Einhängeteil im Bereich des oberen Bereiches der Stirnseite des Griffteiles (2) angeordnet sind und im Bereich des unteren Bereiches der Stirnseite des Griffteiles (2) eine das Griffteil (2) mit dem Gefäß (1) lösbar verbindende Verriegelungsvorrichtung vorgesehen ist und die Ausnehmung am Gefaß (1) und das Einhängeteil am Griffteil (2) vorgesehen sind, dadurch gekennzeichnet, daß an der Außenwandung des Gefäßes (1) ein in sich geschlossener Rahmen (5) befestigt ist, an welchem die Ausnehmung in Form einer einen Abstand zur Gefäßwandung aufweisenden Ausbauchung (6) ausgebildet ist und daß der Rahmen (5) an seinem unteren Bereich mit einer Verriegelungsausbauchung (8) versehen ist, in welche lösbar eine bewegbar am Griffteil (2) gelagerte Lasche (9) einbringbar ist.

2. Gefäß nach Anspruch 1, dadurch gekennzeichnet, daß das Einhängeteil in Form einer von der Stirnseite des Griffteiles (2) nach oben vorspringenden, in die Ausbauchung (6) des Rahmens (5) einführbaren Zunge (7) ausgebildet ist.

3. Gefäß nach Anspruch 2, dadurch gekennzeichnet, daß die Zunge (7) sich über die gesamte Breite des Griffteiles (2) erstreckt und die gleiche Breite aufweist, wie die Ausbauchung (6).

4. Gefäß nach Anspruch 2 oder 3, dadurch gekennzeichnet, daß die Lasche (9) elastisch vorgespannt ist und mit der Verriegelungsausbauchung (8) eine Schnappverbindung bildet.

5. Gefäß nach einem der Ansprüche 3 oder 4, dadurch gekennzeichnet, daß die Lasche (9) mit einem Betätigungsgriff (10) versehen ist.

6. Gefäß nach einem der Ansprüche 1 bis 5, dadurch gekennzeichnet, daß das Griffteil (2) stirnseitig seitliche Abstützvorsprünge (11) aufweist, die mit der Gefäßwandung und/oder dem Rahmen (5) in Anlage bringbar sind.

## Claims

1. A vessel with a removable handle part, a detachable attaching device which interlocks in a positive-locking manner being provided on the front end of the handle part (2) and on the associated mounting region (4) of the vessel (1) and comprising at least one recess which extends substantially vertically and a vertical attaching part which can be introduced into the recess, and the recess and the attaching part being arranged in the region of the upper region of the front end of the handle part (2), and in the region of the lower region of the front end of the handle part (2) there being provided a locking device detachably connecting the handle part (2) to the vessel (1), and the recess being provided on the vessel (1) and the attaching part being provided on the handle part (2), characterised in that a closed frame (5) is secured to the outer wall of the vessel (1) and on the frame there is formed the recess in the form of a bulge (6) at a distance from the vessel wall, and in that the lower region of the frame (5) is provided with a locking bulge (8) into which a flap (9) movably mounted on the handle part (2) can be detachably inserted.

2. A vessel in accordance with Claim 1, characterised in that the attaching part is constructed in the form of a tongue (7) which projects upwards from the front end of the handle part (2) and can be introduced into the bulge (6) of the frame (5).

3. A vessel in accordance with Claim 2, characterised in that the tongue (7) extends over the entire width of the handle part (2) and is the same width as the bulge (6).

4. A vessel in accordance with Claim 2 or 3, characterised in that the flap (9) is resiliently pretensioned and forms a snap-fit connection with the locking bulge (8).

5. A vessel in accordance with any one of Claims 3 or 4, characterised in that the flap (9) is provided with a control handle (10).

6. A vessel in accordance with any one of Claims 1 to 5, characterised in that the front end of the handle part (2) has lateral support projections (11) which can be brought into contact with the vessel wall and/or the frame (5).

## Revendications

1. Récipient à poignée amovible, dans lequel il est prévu sur la face frontale de la poignée (2) et dans la zone de fixation associée (4) du récipient (1), des dispositifs respectifs d'accrochage détachables, qui s'engagent l'un dans l'autre par complémentarité de formes et qui comprennent au moins un évidement sensiblement vertical et un élément d'accrochage vertical, qui peut être introduit dans l'évidement, l'évidement et l'élément d'accrochage étant disposés au niveau de la partie supérieure de la face frontale de la poignée (2) et, dans la zone de la partie inférieure de la face frontale de la poignée (2), il est prévu un dispositif de verrouillage qui relie de façon amovible la poignée (2) au récipient (1), l'évidement étant prévu sur le récipient (1) et l'élément d'accrochage sur la poignée (2), caractérisé en ce que, sur la paroi extérieure du récipient (1) est fixé un cadre fermé (5), dans lequel l'évidement est formé au moyen d'une partie convexe (6) s'écartant de la paroi du récipient, et que le cadre (5) est pourvu, dans sa partie inférieure, d'une partie convexe de verrouillage (8), dans laquelle peut être insérée de façon amovible une patte (9) supportée de manière à être mobile sur la poignée (2).

2. Récipient selon la revendication 1, caractérisé en ce que l'élément d'accrochage est réalisé sous la forme d'une languette (7) qui fait saillie vers le haut à partir de la face frontale de la poignée (2) et peut être introduite dans la partie convexe (6) du cadre (5).

3. Récipient selon la revendication 2, caractérisé en ce que la languette (7) s'étend sur toute la largeur de la poignée (2) et possède la même largeur que la partie convexe (6).

4. Récipient selon la revendication 2 ou 3, caractérisé en ce que la patte (9) est précontrainte élastiquement et forme, avec la partie convexe de verrouillage (8), une liaison à encliquetage.

5. Récipient selon l'une des revendications 2 ou 3, caractérisé en ce que la patte (9) est pourvue d'un organe d'actionnement (10).

6. Récipient selon l'une des revendications 1 à 5, caractérisé en ce que la poignée (2) possède frontalement des appendices saillants latéraux d'appui (11) qui peuvent venir s'appliquer contre la paroi du récipient et/ou le cadre (5).
